# EUROPEAN PATENT APPLICATION

(11) **EP 1 878 711 A1**
(43) Date of publication of application: **16.01.2008**
(21) Application number: 06425480.8
(22) Date of filing: 10.07.2006
(51) Int. Cl.: C04B 14/30, C04B 28/02

(54) **Cementitious surface coating with photocatalytic activity**

(71) Applicant: Global Engineering and Trade S.p.A., 20123 Milano (IT)
(72) Inventor: Terruzzi, Claudio, c/o Global Eng. and Trade SpA, 20123 Milano (IT)
(74) Representative: Lunati, Vittoriano

(57) **Abstract**

A surface coating in cementitious material with photocatalytic action formed by a cementitious matrix (11), and by photocatalytic particles (12), which comprise fine particles (13) having a specific surface greater than 200 m²/g and large particles (14), having a specific surface below 100 m²/g; the coating (1) also comprises a surface layer (2), which forms the outer surface (1a) of the coating (1), which prevalently comprises the fine particles (13).

## Description

The present invention relates to a surface coating in cementitious material with photocatalytic action, of the type specified in the preamble of claim 1.

The photocatalytic process which permits oxidation of pollutants or soiling substances is currently known.

Photocatalysis is based on the use of electrical charges, or electrons, provided by semiconductors when they are energized by specific electromagnetic waves.

A preferred semiconductor, for activation of the photocatalytic process, is titanium dioxide (TiO₂) in the form of Anatase.

The electrons provided by the titanium dioxide form a negative electric charge which bonds easily to other molecules present in the environment. In particular, it bonds to the molecules of oxygen (O₂) present in the atmosphere, forming negative ions (O₂⁻ or O⁻).

The ions O₂- and O- are very reactive and bond to the molecules of pollutants present in the environment, in particular to nitrogen oxides (NOₓ), which are principally nitrogen monoxide and dioxide (NO or NO₂), giving rise to negative ions NO₃⁻ or to carbon monoxide (CO) producing a carbon dioxide CO₂ molecule.

When the photocatalytic substances are disposed in a basic cementitious matrix, the negative ions NO₃⁻, in turn bond easily with positive ions of calcium or sodium (Ca⁺⁺ or Na⁺) disassociated from the compounds (calcium carbonate, plaster...) present in the basic cementitious matrix.

This passage makes it possible not to obtain acids at the end of the photocatalysis process, but harmless salts such as calcium nitrate Ca(NO₃)₂ and sodium nitrate NaNO₃ which precipitate in the environment.

Not only nitrogen and carbon oxides are oxidized using the photocatalytic process, but also many other harmful substances such as: benzene, toluene, ethylbenzene, m-xylene, ozone, sulphur dioxide, formaldehyde, acetaldehyde, PMx, methanol, ethanol...

It is therefore particularly advantageous to produce elements in materials with a cementitious matrix containing particles of TiO₂ in the form of anatase.

In particular, as photocatalysis is activated on exposed surfaces, these materials are utilized above all for surface coatings, for roads, outdoor and indoor walls, pavements and the like.

These materials are utilized as conventional cementitious materials and have substantially the same physico-mechanical properties as them.

They are in fact available in a mix in fluid state comprising water in percentages between 25% and 60% which, left to dry in air, solidifies to form the solidified cementitious material.

Various chemical and physical reactions take part in the solidification process. In particular, during solidification there is partial evaporation of the water, which rises to the surface of the elements through capillarity or by means of other chemico-physical phenomena.

It is therefore simple and inexpensive to dispose these materials in fluid state to produce elements of various shapes and surface areas.

After solidification, the elements produced in the materials described, maintain a good level of physical resistance and form surfaces capable of activating the described photocatalysis reactions.

The aforesaid experiments have nonetheless highlighted some important drawbacks.

In fact, it has been observed that materials with a cementitious matrix containing photocatalytic particles do not activate photocatalysis action with constant and long-lasting effectiveness.

In particular, in the period immediately after solidification of the cement, the photocatalysis action has low effectiveness.

The applicant has discovered that the problem described is caused in particular by formation on the surface of elements in photocatalytic cementitious materials of a layer of calcium carbonate (CaCO₃) which shields the action of the photocatalytic elements.

The layer of calcium carbonate forms due to solubilization of the calcium hydroxide (Ca(OH)₂) in the water. Calcium hydroxide, being soluble in water, rises to the surface with the water and subsequently comes into contact with carbon dioxide (CO2), transforming into calcium carbonate (CaCO₃), which deposits on the surface.

After an initial period, normal wear eliminates the layer of calcium carbonate, but the problem of a first period of low effectiveness remains. It has also been found that this initial period can last for a considerable amount of time, in the case of reduced wear, for instance on the walls of buildings.

This problem has been solved by removing a surface portion of said elements.

Nonetheless, this removal operation results in an increase in costs and diversified design of the cementitious components. Therefore, cementitious materials cannot be produced according to conventional prior art techniques. Moreover, in many applications, such as tunnels, removing the surface of the material is somewhat impractical.

It has also be found that, after high wear on elements made of cementitious materials with photocatalytic action, the effectiveness of the photocatalysis action decreases once again.

Therefore, the technical problem of how to produce a surface coating in cementitious material with photocatalytic action, which is inexpensive and which activates a photocatalysis action with high and long-lasting effectiveness, in particular in the period immediately after application, remains unsolved.

In this situation, the technical task underlying the present invention is to create a surface coating in cementitious material with photocatalytic action capable of substantially overcoming the aforesaid drawbacks.

Within said technical aim, an important object of the invention is to produce a surface coating in cementitious material with photocatalytic action which activates a photocatalysis action with high and long-lasting effectiveness, in particular in the period after application.

Another important object of the invention is to produce a surface coating in cementitious material with photocatalytic action that is inexpensive and can be produced through prior art techniques for the use of conventional cement. The technical task and the objects specified are attained by a surface coating in cementitious material with photocatalytic action as claimed in the appended Claim 1.

Preferred embodiments are highlighted in the sub-claims.

Further features and advantages of the invention are better explained below in the detailed description of a preferred embodiment of the invention, with reference to the attached drawings, wherein:
**Figure 1** schematically shows a sectional view of a surface coating in cementitious material with photocatalytic action according to the invention;
**Figure 2** shows a graph which compares the photocatalytic action of a surface coating according to the invention and a surface coating with photocatalytic action of known type; and

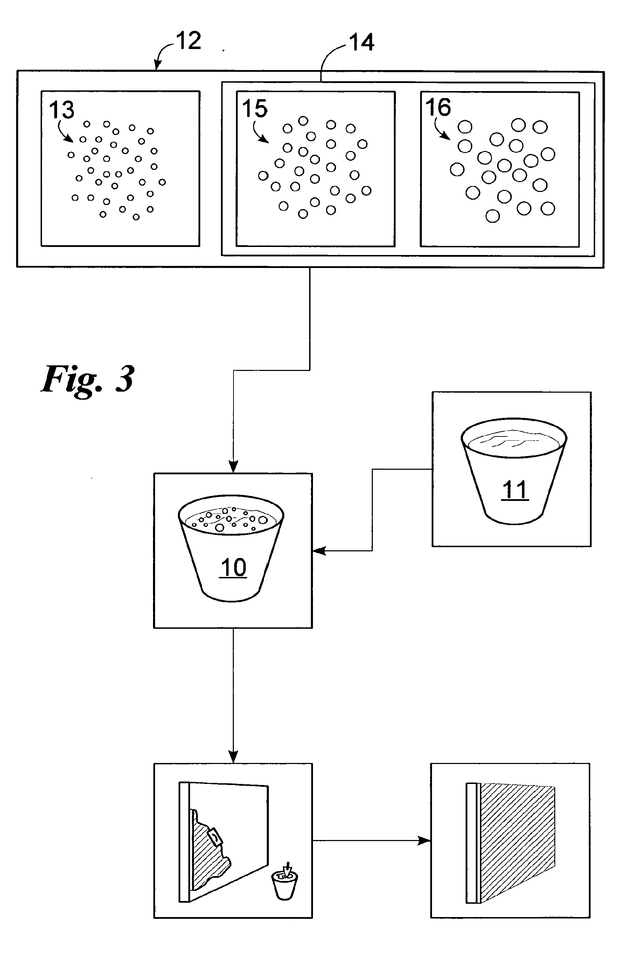

**Figure 3** schematizes the process to produce a surface coating in cementitious material with photocatalytic action according to the invention.

### DETAILED DESCRIPTION OF THE PREFERRED EMBODIMENT

With reference to the aforesaid figures, the surface coating according to the invention is globally indicated with the numeral **1.**

It comprises an outer surface **1a** in contact with the environment and capable of activating photocatalysis reactions. In particular it is produced on roads, outdoor and indoor walls, pavements, monuments, fountains, cementitious elements and the like.

The coating 1 comprises a surface layer **2,** forming the outer surface 1a of the coating, and having a thickness between 0.5 mm and 5 mm, preferably between 1 mm and 2 mm. As described in the first part of the present patent, a layer of calcium carbonate forms on the surface layer 2.

The coating 1 also comprises an underlying layer **3,** abutting with the surface layer 2 and having a thickness between 2 and 20 cm, preferably between 6 cm and 14 cm.

The underlying layer 3 can in turn be divided into an intermediate layer **4,** abutting with the surface layer 2, and a base layer **5,** abutting with the intermediate layer 4. The two layers 4 and 5 have thicknesses equivalent to 30% to 70% of the thickness of the underlying layer 3 that they form.

The surface coating 1 is produced in a cementitious material with photocatalytic action **10,** composed of a cementitious matrix **11** and of photocatalytic particles **12.**

The cementitious matrix **11** is composed of cements, mortars and the like. This matrix 11 can also comprise various aggregates, reinforcements and the like.

The photocatalytic particles 12 are in semiconductor materials, suitable to activate photocatalysis reactions in combination with sunlight. These particles are preferably titanium dioxide (TiO₂) in the form of anatase.

They are present in a quantity in weight below 30% of the weight of the material 10.

The particles 12 comprise fine particles **13** having a specific surface greater than 200 m²/g, preferably greater than 270 m²/g and even more preferably around 300 m²/g.

As it is known, specific surface is a parameter utilized to measure the dimension of the very fine dusts or particles. It measures the total area of the surface of the particles per unit of weight, in this specific case the m² of surface occupied by one gram of particles. It is evident that the larger the specific surface is, the smaller the volume of the individual particles will be.

The fine particles 13 are present in a quantity in weight between 5% and 50% of the weight of the particles 12, and in a quantity in weight between 0.5% and 15%, in particular between 1% and 2% of the quantity in weight of the cementitious matrix 11.

The particles 12 also comprise large particles **14** having a specific surface below 100 m²/g. These are present in a quantity in weight between 1% and 30%, in particular between 2% and 3%, of the quantity in weight of the cementitious matrix **11.** These large particles **14** can in turn be divided into intermediate particles **15,** having a specific surface between 100 m²/g and 60 m²/g, preferably around 80 m²/g, and coarse particles **16,** having a specific surface between 60 m²/g and 20 m²/g, preferably around 50 m²/g. The intermediate 15 and coarse 16 particles are preferably present in a quantity in weight between 25% and 75%, preferably between 40% and 60% of the quantity in weight of the large particles 14 that they form.

The fine 13, intermediate 15 and coarse 16 particles are known per se and marketed, for instance, by Millenium Company, respectively with the names PC 500, PC 105 and PC 50.

Moreover, the fine particles 13 are prevalently disposed in the surface layer 2 and the surface layer 2 comprises particles 12 prevalently of the fine type 13.

Simultaneously, the large particles 14 are prevalently disposed in the underlying layer 3 and the underlying layer 3 comprises particles 12 prevalently of the large type 14.

More specifically, the intermediate particles 15 are prevalently disposed in the intermediate layer 4 and the coarse particles 16 are prevalently disposed in the base layer 5. Conversely, the intermediate layer 4 comprises particles 12 prevalently of the intermediate type 15 and the base layer 5 comprises particles 12 prevalently of the coarse type 16.

The invention comprises a new process to produce the surface coating 1 described.

The process to produce the surface coating 1 consists firstly of producing the cementitious material 10.

The material 10 is produced by mixing together the cementitious matrix 11, of the types specified, and the particles 12 comprising the fine 13 and large 14 types previously specified.

The material is mixed when the cementitious matrix 11 is in fluid state, or also in powder form before water is added.

The surface coating 1 is subsequently produced by disposing the material 10 according to prior art processing techniques of cementitious materials, i.e. using formworks or simply by spreading the material.

Finally, the coating 1, realized by material in fluid state, is left to cure and dry in the outdoor environment, i.e. in the open air.

During curing of the coating 1 the previously described surface 2 and underlying 3 layers form.

The applicant has in fact discovered that the water contained in the cement matrix 11, during partial evaporation thereof, draws the fine particles 13 to the surface layer 2 of the coating 1.

As described in prior art, in fact, water rises to the surface 1 a of the coating 1 through capillarity, or by means of other chemico-physical phenomena, during curing and drying in air of the cementitious matrix 11.

In its upward path, the water draws the finest particles with it.

In particular, the fine particles 13, within the limits indicated above, are drawn to the surface and then deposit prevalently on the surface layer 2. It must be borne in mind that, as described in the first part of the present patent, a layer of calcium carbonate also forms on the surface layer 2.

Instead, the large particles 14 remain inside the coating 1, i.e. in the underlying layer 3.

In particular, due to their larger mass, during curing of the cementitious matrix 11, the coarse particles 16 deposit on the base layer 5, while the intermediate particles 15 remain in the intermediate layer 4.

The invention achieves important advantages.

In fact, the surface coating 1 activates a photocatalysis action with high and long-lasting effectiveness.

In particular, in the period after application it is unnecessary to treat the surface 1 a by removing a portion thereof in order for the photocatalysis reaction to take place immediately with high effectiveness.

The advantage described is due to the fact that the fine particles 13 rise to the surface and are inserted into and on top of the layer of calcium carbonate described in prior art.

Therefore, the calcium carbonate no longer forms a barrier to photocatalysis, which can be activated immediately without further processing operations.

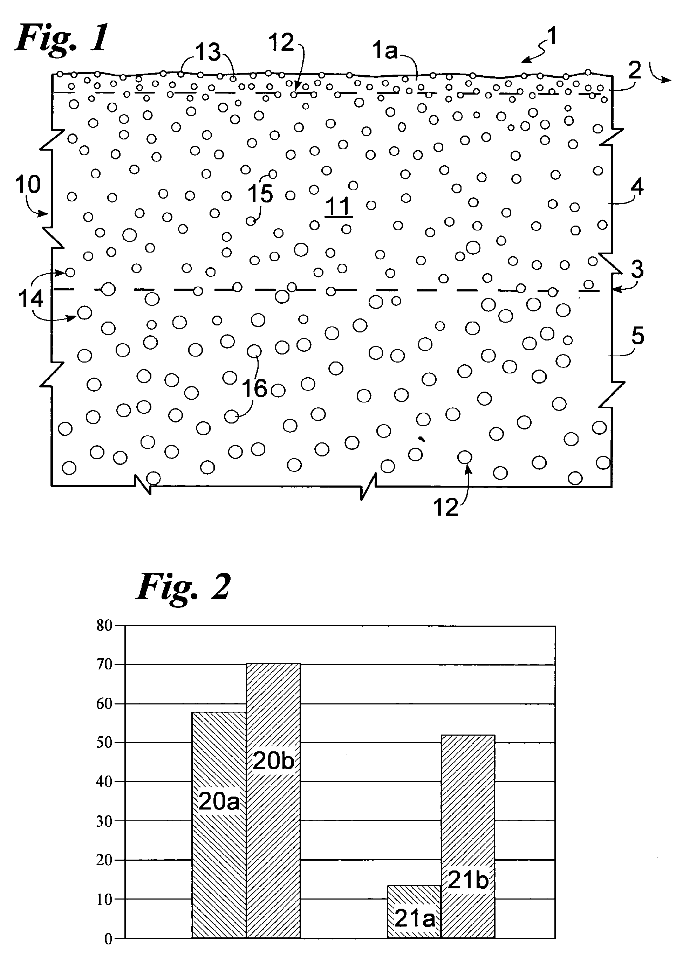

The graph in Figure 2 quantizes the advantage of the surface coating 1 according to the invention.

In fact, this graph indicates, in the ordinate, the percentage of nitrogen oxides (NOₓ) reduced through the action of photocatalysis of surface coatings with photocatalytic action. In particular, the column **21a** indicates the action of a coating 1 according to the invention in the period immediately after application thereof, and the column **21b** indicates the action of a coating 1 in a period a long time after application.

The action of a conventional coating with photocatalytic action, in particular of a coating in cementitious matrix containing only particles of TiO₂ having a specific surface equal to 80 m²/g is also indicated. The action of said conventional coating in the period immediately after application is indicated in the column **22a,** while the action thereof in a period a long time after application is indicated in the column **21b**.

It can be seen how the coating **1** according to the invention is activated immediately without the need for surface treatments. In fact, in this period the action of the coating 1 according to the invention is greater than the action of a conventional coating by approximately 400%.

The coating 1 according to the invention is also much longer lasting than conventional photocatalytic cementitious coatings.

In fact, the coarse particles 16 which deposit on the base layer 5 ensure that the coating 1, subsequent to heavy wear that exposes the base layer 5, contains particles 12 in photocatalytic material.

A further important advantage of the coating 1 is its low cost and ability to be used according to prior art techniques, to produce coatings in cementitious materials.

In fact, no processes to remove surfaces and treatments subsequent to laying are necessary.

## Claims

1. Surface coating in cementitious material with photocatalytic action including a cementitious matrix (11), and photocatalytic particles (12), **characterized in that** said photocatalytic particles (12) comprise fine particles (13) having a specific surface greater than 200 m²/g, and large particles (14) having a specific surface below 100 m²/g, and **in that** it comprises a surface layer (2) forming the outer surface (1a) of said coating (1) and an underlying layer (3) abutting with said surface layer (2), and in which said fine particles (13) are prevalently disposed in said surface layer (2).

2. Coating according to claim 1, wherein said fine particles (13) have a specific surface greater than 270 m²/g.

3. Coating according to one or more of the previous claims, wherein said fine particles (13) are present in a quantity in weight between 1% and 2% with respect to the quantity in weight of said cementitious matrix (11).

4. Coating according to one or more of the previous claims, wherein said particles (12) are titanium dioxide in the form of anatase.

5. Coating according to one or more of the previous claims, wherein said surface layer (2) has a thickness between 1 mm and 2 mm.

6. Coating according to one or more of the previous claims, wherein said surface layer (2) comprises particles (12) prevalently of the fine type (13).

7. Coating according to one or more of the previous claims, wherein said large particles (14) are prevalently disposed in said underlying layer (2).

8. Coating according to one or more of the previous claims, wherein said large particles (14) are included in a quantity in weight between 2% and 3% with respect to the quantity in weight of said cementitious matrix (11).

9. Coating according to one or more of the previous claims, wherein said underlying layer (3) comprises an intermediate layer (4), abutting with said surface layer (2), and a base layer (5), abutting with said intermediate layer (4), and wherein said large particles (14) comprise intermediate particles (15), having a specific surface between 100 m²/g and 60 m²/g prevalently disposed in said intermediate layer (4), and coarse particles (16) having a specific surface between 60 m²/g and 20 m²/g prevalently disposed in said base layer (4).

10. Coating according to claim 9, wherein said intermediate particles (15) and said coarse particles (16) are present in a quantity in weight between 40% and 60%, with respect to the quantity in weight of said large particles (14).

11. Process to produce a coating in cementitious material with photocatalytic action (1) comprising the preparation of a cementitious matrix (11), the preparation of photocatalytic particles (12) and mixing said photocatalytic particles (12) in said cementitious matrix (11), **characterized in that** said preparation of photocatalytic particles (12) is performed by predisposing fine particles (13) having a specific surface greater than 200 m²/g and large particles (14) having a specific surface below 100 m²/g, **in that** said mixing is performed inserting said fine particles (13) and said large particles (14) in said cementitious matrix (11), and **in that** said cementitious matrix (11) predisposed in fluid state is cured gradually in a manner suitable to determine, through evaporation and capillarity, a movement of said fine particles (13) suitable to determine a surface layer prevalently incorporating said particles.

12. Process according to claim 11, wherein said preparation of photocatalytic particles (12) is performed by predisposing fine particles (13) having a specific surface greater than 200 m²/g and intermediate particles (15), having a specific surface between 100 m²/g and 60 m²/g, and coarse particles (16) having a specific surface between 60 m²/g and 20 m²/g, said coarse particles (16) being suitable to deposit on a base layer (4) of said coating (1).
